Europäisches Patentamt

European Patent Office

Office européen des brevets

(11) Publication number: 0 337 663
A2

(12) **EUROPEAN PATENT APPLICATION**

(21) Application number: 89303409.0

(22) Date of filing: 06.04.89

(51) Int. Cl.⁴: B01D 36/00 , B01D 19/00

(30) Priority: 14.04.88 US 181416

(43) Date of publication of application:
18.10.89 Bulletin 89/42

(84) Designated Contracting States:
BE CH DE FR GB IT LI LU NL SE

(71) Applicant: Nalge Company
75 Panorama Creek Drive P O Box 20365
Rochester New York 15602(US)

(72) Inventor: Leoncavallo, Richard Anthony
45, Monroe Avenue
Pittsford, New York 14534(US)
Inventor: Phillips, Gregory Robert
2080, Penfield Road
Penfield, New York 14526(US)
Inventor: Mehra, Ravinder Chamanlal
One Crowhill Drive
Fairport, New York 14450(US)

(74) Representative: Oliver, Roy Edward et al
Pollak Mercer & Tench Eastcheap House
Central Approach
Letchworth Hertfordshire SG6 3DS(GB)

(54) Filter and bleed valve therefor.

(57) The invention relates to a bleed valve (22) for releasing trapped gas in a controlled manner trapped gas from within the filter chamber (14) of a filter (10) for filtering a pressurised solution. The bleed valve includes a stem (24) secured to the filter and having a bore (26) communicating with the filter chamber and a cap (40) for controlling the release of trapped gas or air within the filter chamber. The cap has a plunger (43) with a contact surface (46) which mates with a portion (35) of the inside surface of the stem bore, and an extension (48) which fits within a narrow portion of the bore.

FIG. 3

# FILTER AND BLEED VALVE THEREFOR

The present invention relates to filtration and more particularly to a filter for filtering substances from a pure or colloidal solution under pressure.

A problem associated with filtering a solution under pressure is that if trapped air or gas is present in the filtering chamber, this can substantially reduce or block the flow through the filter unit. In some instances, the prior art has attempted to provide features which can remove trapped air from the filtering chamber. These methods have usually been limited to simply allowing air to escape in an uncontrolled manner. However, since the solution to be filtered is under pressure, this can result in the solution to be filtered squirting out of the chamber, causing a mess and potential contamination of the surrounding area and possibly affecting the results of the filtering process being conducted.

Therefore it is an important object of this invention to remove trapped air or gas efficiently from within the filter chamber of a filter for filtering substances from a pure or colloidal solution under pressure.

According to the invention there is provided a valve for releasing trapped air or gas from a filter for filtering a pressurised solution, comprising a neck portion for communication with the filter for escape of air or gas therefrom, valve means in the neck portion, and a cap mounted for angular movement on the neck to move the valve means so as to control the escape of air or gas from the filter. The invention thus comprises a bleed valve for releasing trapped gas from within the filter chamber. It is a principal advantage of this invention that the bleed valve releases trapped air or gas from the filter chamber in a controlled manner. The bleed valve may include a stem secured to the filter having a bore therethrough for communication with the filter chamber and a cap for controlling the release of trapped gas within the filter chamber. The cap may have a plunger with a contact surface which mates with a portion of the inside surface of the stem bore and an extension which fits within a narrow portion of the bore. Further features are given in the claims. The invention enables gas or air trapped in the filter chamber to be released in a controlled manner, which guards against the solution squirting out of the chamber, contamination of the surrounding area and adverse effects on the filtration.

An embodiment of the invention will be described by way of example, with reference to the drawings, in which:

Figure 1 is a top plan view of a closed filter made in accordance with the present invention;

Figure 2 is a front elevational view of the filter of Figure 1;

Figure 3 is a cross-sectional view of the filter of Figure 2 taken along the line 3-3; and

Figure 4 is an enlarged sectional view of a portion of the filter of Figure 1 illustrating means for removing trapped gas from within the filtering chamber.

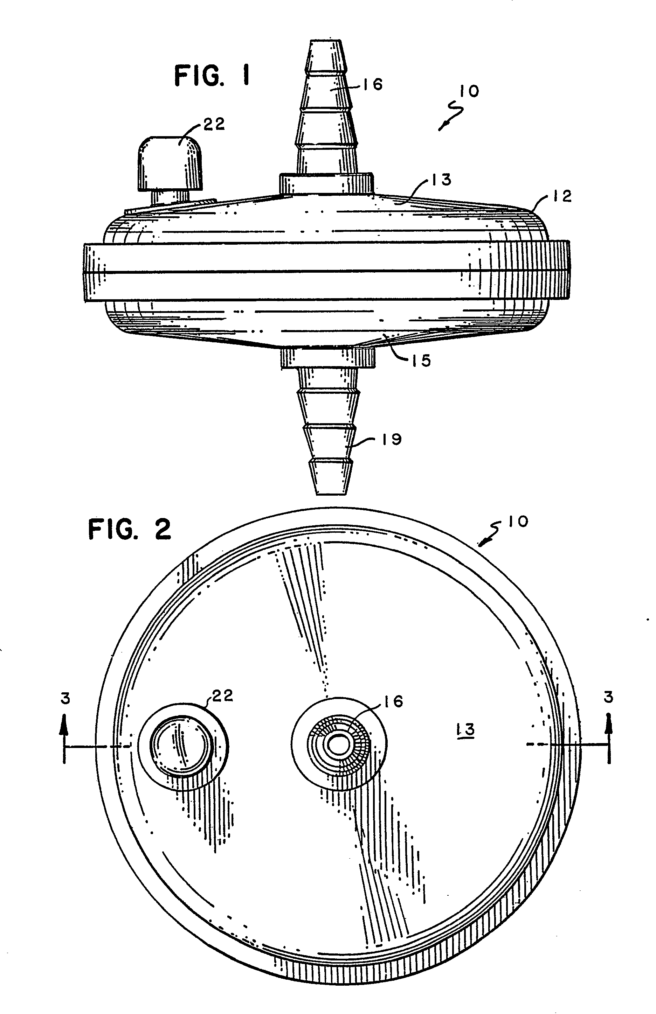

Referring to Figures 1 to 4, there is illustrated a filter assembly 10. Typically, the filter assembly 10 is designed to filter liquids under pressure up to about 65 psi (450 kN/m$^2$), generally in the range from 10 to 25 psi (69 to 173 kN/m$^2$) and can be disposed of after a single use. The filter assembly 10 comprises a plastics housing 12 formed by a moulded plastics upper portion 13 and a moulded plastics lower portion 15, which are sealed together by ultrasonic welding to form a filtering chamber 14 within. Typically, such filter units are disposable filter units designed for single use. The upper and lower portions 13, 15 may be made of any desired plastics material. In the embodiment illustrated, the portions 13, 15 are made of a polycarbonate. The housing 12 has an inlet·port 16 integrally formed therein having a passage 26 which communicates with the filter chamber 14. The housing 12 further comprises an outlet port 19 for removing the liquid after it has been filtered.

Filter means 17 for filtering a liquid entering the filtering chamber are provided within the chamber 14. In the embodiment illustrated, the filter means 17 comprise a plurality of support disks 18 each having a flat filtering membrane 20 disposed on each side of the support disk 18 for filtering a liquid. The disks 18 each have a passageway therein, for receiving the filtrate which is filtered by the membrane 20, which communicates with a common passage 19', which in turn communicates with the outlet port 19. The details of construction of the filter means 17 and may be found in concurrent co-pending U.S. Application Serial No. 181,417 and the European application which claims priority therefrom. However, any other suitable filter means may be used for filtering the liquid within the filter chamber 14.

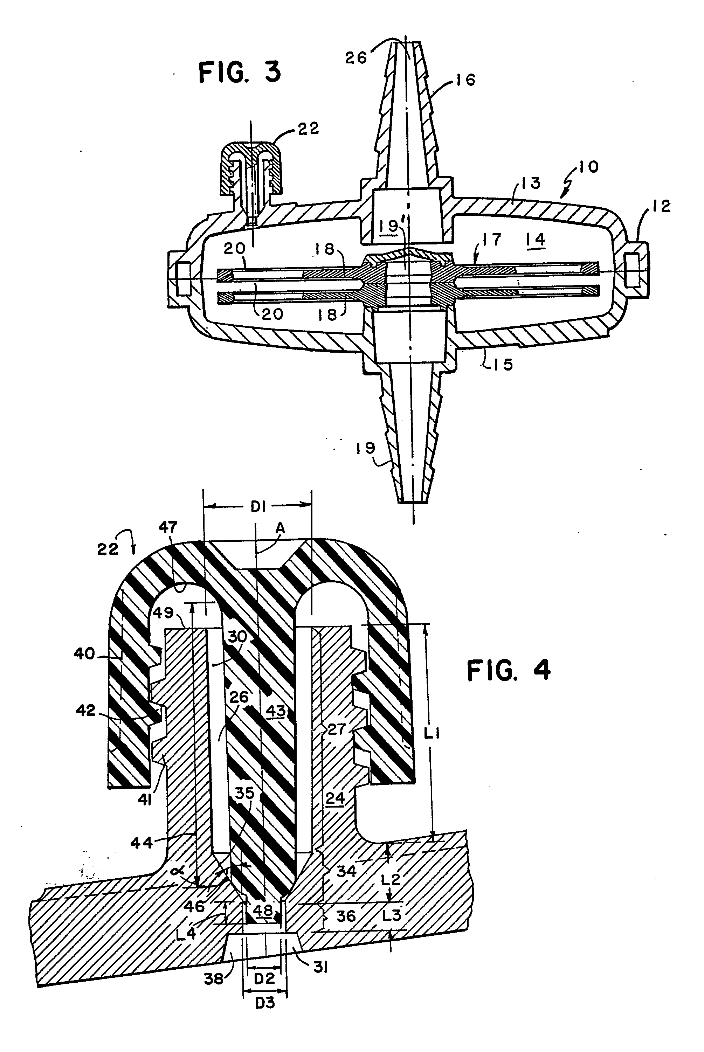

A bleed valve assembly 22 is provided in the housing 12 for removing trapped gas from within the filter chamber 14. Referring to Figure 4, there is illustrated an enlarged cross-sectional view of the bleed valve assembly 22 made in accordance with the present invention. The bleed valve assembly 22 comprises a stem member 24 which extends outwardly away from the housing 12. Preferably, the stem 24 is formed integrally with the housing 12.

The stem 24 has a passage or bore 26 which extends therethrough. The outer end 30 of the bore 26 communicates with the outside environment, such as the atmosphere, and the inner end 31 of the bore 26 communicates with the filtering chamber 14. The bore 26 has a longitudinal first section 27 of a preselected length L1 and diameter D1. Preferably, the diameter D1 is substantially constant along the length L1. A transition or second section 34 is provided adjacent the inner end of the first longitudinal section 27, where the diameter of the bore 26 substantially decreases along the length L2 of the transition section 34. In the embodiment illustrated, a mating surface 35 is disposed at an angle $\alpha$ of about 30È with respect to the longitudinal axis A of the bore 26. However, this mating surface 35 may be disposed at any desired angle $\alpha$ capable of providing a seal. The bore 26 adjacent the inner end of the transition section 34 is provided with a narrow substantially cylindrical section 36 having a diameter D2 and a length L3. In the embodiment illustrated, a recess 38 is conveniently provided a recess 38 at the inner end of the narrow cylindrical section 36. However, the recess 38 may be omitted if so desired.

A plastics bleed cap 40 is provided for engagement with the exterior portion of the stem member 24. Preferably the cap 40 is made of a more pliable material than the stem 24. In the embodiment illustrated, the exterior of the stem 24 is provided with threads 41 which mate with corresponding threads 42 in the inner surface of the bleed cap 40. When the bleed cap 40 is angularly moved in one direction or in the opposite direction, this will cause the cap 40 to move vertically up or down respectively. The threads 41, 42 are of a pitch and size which allow easy passage of a gas therethrough. The bleed cap 40 is provided with a plunger 43 which extends within the bore 26 for controlling the flow of trapped air from within the chamber 14 to the external environment, typically the atmosphere.

The plunger 43 has a first longitudinal section 44 which terminates in an annular contact tip section 46 which is designed to mate with the mating surface 35 of the transition section 34 of the stem member 24. The longitudinal section 44 of the plunger 43 has a cross-sectional area sufficiently smaller than the longitudinal section 27 of the bore 26 to allow gas to flow easily in the space between the plunger 43 and the edge of the bore 26. The annular contact tip section 46 preferably has a curved configuration so as to provide sealing engagement when pressed against the mating surface 35 of the transition section 34 of the stem member 24. The plunger 43 has such a length that the upper inside surface 47 of the cap 40 does not engage the outer end 49 of the stem 24. At the inner end of the contact tip section 46, a cylindrical extension 48 of length L4 is provided, which is designed to extend into the narrow cylindrical section 36 of the stem 24. The length L4 of the extension 48 is such that, during rotation of the cap 40, a portion of the extension 48 will still remain within the cylindrical section 36 so as to allow controlled escape of trapped air. L4 may be about 0.19 cm (0.075"). The cylindrical extension 48 is designed to have a diameter D4 only slightly less than the inside diameter D3 of the narrow cylindrical section 36 of the stem 24. The diameter D1 may be approximately 0.14 cm (0.055") and the diameter D2 may be approximately 0.11 cm (0.045").

When the bleed cap 40 is tightly secured to the stem 24, the contact tip section 46 engages the transition section 34, of the stem member 24 so as to provide an annular seal between the transition section 34 and the tip section 46 to prevent any air and/or liquid from escaping from within the pressurized chamber 14. However, when it is desired to remove trapped air from within the filter chamber 14, the cap 40 is simply rotated in the appropriate direction so as to cause upward vertical movement of the cap 40, thereby causing the plunger 43 to move out of engagement with the transition section 34. As this occurs, trapped air or gas will be allowed to escape in a controlled manner from the space between the plunger 43 and surrounding parts of the inner surface of the bore 26, upwards past the exterior end of the bore 26 and past the threaded sections of the cap 40 and the stem 24. The pitches of threads 41, 42 are such that vertical movement of the plunger 43 is relatively slow, preferably such that the extension 48 will not leave the narrow section 36 in less than 1/4 rotation of the cap 40 and, preferably, in not less than 1/2 rotation.

Since the extension 48 is close in diameter to the narrow cylindrical section 36, the rate of escape of trapped gas is relatively slow and therefore can be controlled quite easily by rotation of cap the 40. Further, since the cap 40 and the housing 12 are generally made of a clear or translucent plastics material, the rate at which trapped gas escapes can be carefully controlled and, if necessary, the bleed cap 40 can be closed to prevent or minimize any escape of liquid from within the chamber 14. Additionally, since the sealing portions of the cap 40 and the stem 24 are distinct from the extension 48, repeated opening and closing of the cap 40 will not substantially affect the ability to control the rate of escape of trapped gases.

It is to be understood that various changes or modifications may be made without departing from the scope of the present invention. For example, but not by way of limitation, the shape and/or configuration of the mating surface 35 and the contact tip section 46 may be varied as desired, so long as a sealing relationship is formed therebetween. The scope of the present invention is defined by the following claims.

**Claims**

1. A valve (22) for releasing trapped air or gas from a filter (10) for filtering a pressurised solution, comprising a neck portion (24) for communication with the filter for escape of air or gas therefrom, valve means (43) in the neck portion, and a cap (40) mounted for angular movement on the neck portion to move the valve means so as to control the escape of air or gas from the filter.

2. A valve according to claim 1, wherein the valve means comprise a stopper (43) depending from the cap, and a bore (26) through the neck, wherein the stopper is movable between at least one position in which the neck is open or partially open and a position in which the neck is closed.

3. A valve according to claim 2, wherein that the stopper comprises a sealing portion (44, 46) for selectively engaging or disengaging a shoulder (35) in the neck bore.

4. A valve according to claim 3, wherein the stopper comprises an extension (48) of the sealing portion disposed in a portion (36) of the neck having a reduced diameter and communicating with the filter.

5. A valve according to claim 3 or 4, wherein the shoulder in the neck is slanting.

6. A bleed valve device (22) for removing trapped air or gas from a filter (10) for filtering a pressurised solution, comprising:
a stem (24) on a filter housing (12), the stem having a bore (26) extending therethrough into a filter chamber (14) in the housing, the said bore having a first longitudinal section (27) which communicates with the surrounding environment, a transition section (34) having a cross-sectional shape which decreases in size along its length and a narrow section (36) which communicates with the filter chamber, the transition section having an annular mating sealing surface (35);
a bleed cap (40) having means (42) for engaging the stem, the cap having a central longitudinal plunger (43) which extends into the stem bore, the plunger having a first longitudinal section (44), an annular contact tip section (46) for mating with the annular mating sealing surface and a longitudinal inner end (48) capable of extending into the narrow section of the bore, the cap when tightly secured to the stem causing the contact annular tip section to seal matingly with the mating sealing surface of the transition section and, when the cap is loosened, causing the contact annular tip section to move away from the transition section to allow controlled escape to the exterior of air or gas trapped within the chamber.

7. A valve device according to claim 6, wherein the cross-sectional configuration of the inner end of the plunger substantially fills the narrow section of the bore when the cap is tightly engaged with respect to the stem.

8. A valve device according to claim 6 or 7, wherein the annular mating surface is disposed at an angle of about 30°.

9. A valve device according to claim 7 or 8, wherein the narrow section has a diameter of about 0.14 cm (0.055 inches) and the inner end of the plunger has a diameter of about 0.11 cm (0.045 inches).

10. A filter (10) for filtering a pressurised solution, including a valve or valve device according to any preceding claim.

11. A filter (10) for filtering a pressurised solution, having a housing (12) which forms a filter chamber (14), filter means (17) disposed within the filter chamber for filtering a liquid, the housing having an inlet (16) for admitting a liquid to be filtered to the filter chamber, an outlet (19) for allowing filtrate to leave the filter chamber, and a bleed valve (22) according to any of claims 1 to 9, for removing trapped air or gas within the filter chamber. according to any of claims 1 to 9.

FIG. 1

FIG. 2

# FIG. 3

# FIG. 4